# EUROPÄISCHE PATENTSCHRIFT

(11) **EP 0 521 928 B1**
(45) Veröffentlichungstag und Bekanntmachung des Hinweises auf die Patenterteilung: **31.08.1994**
(21) Anmeldenummer: 91906285.1
(22) Anmeldetag: 13.03.1991
(51) Int. Cl.: C08F 299/06, C09D 151/08, B05D 7/26

(54) **VERFAHREN ZUR HERSTELLUNG EINER MEHRSCHICHTIGEN LACKIERUNG UND WÄSSRIGER LACK**
PROCESS FOR PRODUCING A MULTI-LAYER PAINT COATING AND AQUEOUS PAINT
PROCEDE DE PRODUCTION D'ENDUITS DE LAQUE A COUCHES MULTIPLES ET LAQUE AQUEUSE

(30) Priorität: 30.03.1990 DE 4010176
(43) Veröffentlichungstag der Anmeldung: 13.01.1993
(73) Patentinhaber: BASF Lacke + Farben AG, 48165 Münster-Hiltrup (DE)
(72) Erfinder: HARTUNG, Michael, D-4787 Geseke (DE); GRABBE, Michael, D-4403 Senden (DE); MAYENFELS, Peter, Dr., D-4400 Münster (DE)
(74) Vertreter: Münch, Volker, Dr.
(86) Internationale Anmeldenummer: EP9100464
(87) Internationale Veröffentlichungsnummer: WO9115528

(56) Entgegenhaltungen:
- DATABASE WPIL, File Supplier, AN - 85 - 207691, Derwent Publications Ltd, (London, GB), & JP, A, 60132641

## Beschreibung

Die Erfindung betrifft ein Verfahren, bei dem
(1) ein pigmentierter wäßriger Basislack auf die Substratoberfläche aufgebracht wird,
(2) aus der in Stufe (1) aufgebrachten Zusammensetzung ein Polymerfilm gebildet wird,
(3) auf der so erhaltenen Basisschicht ein transparenter Decklack aufgebracht wird und anschließend
(4) die Basisschicht zusammen mit der Deckschicht eingebrannt wird.

Die Erfindung betrifft auch einen wäßrigen Lack.

Das oben beschriebene Verfahren zur Herstellung mehrschichtiger Lackierungen ist bekannt und wird insbesondere zur Lackierung von Automobilkarosserien eingesetzt.

Das Ergebnis des oben beschriebenen Verfahrens hängt entscheidend vom eingesetzten Basislack ab. Der Basislack hat starken Einfluß auf die Qualität der Gesamtlackierung.
Bis heute sind keine wäßrigen Basislacke bekannt, die für die Serienlackierung und Reparaturlackierung geeignet sind und qualitativ hochwertige Gesamtlackierungen liefern.

Die der vorliegenden Erfindung zugrundeliegende Aufgabenstellung besteht in der Bereitstellung neuer wäßriger Lacke, die als Basislacke zur Durchführung des oben beschriebenen Verfahrens geeignet sind.

Diese Aufgabe wird durch die Bereitstellung von wäßrigen Lacken gelöst, die dadurch gekennzeichnet sind, daß sie als Bindemittel ein Polymer enthalten, das erhältlich ist, indem in einem organischen Lösemittel oder in einem Gemisch organischer Lösemittel bei 80 bis 160°C
(A) ethylenisch ungesättigte Monomere oder ein Gemisch ethylenisch ungesättigter Monomere in Gegenwart
(B) eines Polyurethanharzes, das in dem organischen Lösemittel oder Gemisch organischer Lösemittel gelöst ist, ein zahlenmittleres Molekulargewicht von 200 bis 30.000 aufweist und im statistischen Mittel pro Molekül 0,05 bis 1,1 polymerisierbare Doppelbindungen enthält,
radikalisch polymerisiert werden und das so erhaltene Reaktionsprodukt zumindest teilweise neutralisiert und in Wasser dispergiert wird, wobei
- das Polyurethanharz (B) aus
   (a) einem Polyester- und/oder Polyetherpolyol mit einem zahlenmittleren Molekulargewicht von 400 bis 5000 oder einem Gemisch aus solchen Polyester- und/oder Polyetherpolyolen,
   (b) einem Polyisocyanat oder einem Gemisch aus Polyisocyanaten,
   (c) gegebenenfalls einer Verbindung, die neben einer polymerisierbaren Doppelbindung mindestens noch eine gegenüber NCO-Gruppen reaktive Gruppe enthält oder einem Gemisch aus solchen Verbindungen,
   (d) gegebenenfalls einer Verbindung, die mindestens eine gegenüber Isocyanatgruppen reaktive und mindestens eine zur Anionenbildung befähigte Gruppe im Molekül aufweist oder einem Gemisch aus solchen Verbindungen
   (e) gegebenenfalls einer Verbindung, die mindestens eine gegenüber NCO-Gruppen reaktive Gruppe und mindestens eine Poly(oxyalkylen)gruppe im Molekül aufweist, oder einem Gemisch aus solchen Verbindungen und gegebenenfalls
   (f) einer Hydroxyl- und/oder Aminogruppen enthaltenden organischen Verbindung mit einem Molekulargewicht von 60 bis 600, oder einem Gemisch aus solchen Verbindungen
   hergestellt wird
- die Komponenten (A) und (B) in einem Gewichtsverhältnis von 1 : 10 bis 10 : 1 eingesetzt werden und
- das aus (A) und (B) hergestellte Polymer eine solche Menge an zur Anionenbildung befähigten Gruppen enthält, daß das Polymer eine Säurezahl von 5 bis 200 aufweist.

Die erfindungsgemäßen Basislacke zeichnen sich dadurch aus, daß sie schon nach kurzer Zeit mit einem wäßrigen oder konventionellen Klarlack im "Naß-in-Naß"-Verfahren ohne Störung der Basislackschicht überlackiert werden können und daß sie - auch bei niedrigen Einbrenntemperaturen, z.B. bei 80°C - Lackierungen mit hoher Schwitzwasserbeständigkeit und guten mechanischen Eigenschaften liefern.

In der EP-A-297 576 werden Basislacke offenbart, die zur Durchführung des in Rede stehenden Verfahrens geeignet sein sollen. Die in der EP-A-297 576 beschriebenen Basislacke enthalten als Bindemittel Polymere, die erhältlich sind, indem in Wasser ethylenisch ungesättigte Verbindungen in Gegenwart eines doppelbindungsfreien Polyurethanharzes polymerisiert werden. Dieses Verfahren ist aufwendig und führt zu Bindemitteldispersionen, die oft Koagulat enthalten und zur Dispergierung von Pigmenten nicht geeignet sind. Außerdem unterscheiden sich die in der EP-A-297 576 offenbarten Bindemittel in ihrer chemischen Struktur wesentlich von den erfindungsgemäß eingesetzten Bindemitteln.

Zur Herstellung der erfindungsgemäß eingesetzten Bindemittel wird in einem ersten Schritt nach gut bekannten Methoden der Polyurethanchemie ein Polyurethanharz (B) hergestellt. Das Polyurethanharz wird aus folgenden Komponenten hergestellt:
(a) ein Polyester- und/oder Polyetherpolyol mit einem zahlenmittleren Molekulargewicht von 400 bis 5000 oder ein Gemisch aus solchen Polyester- und/oder Polyetherpolyolen
(b) ein Polyisocyanat oder ein Gemisch aus Polyisocyanaten
(c) gegebenenfalls eine Verbindung, die neben einer polymerisierbaren Doppelbindung mindestens noch eine gegenüber NCO-Gruppen reaktive Gruppe enthält oder ein Gemisch aus solchen Verbindungen
(d) gegebenenfalls eine Verbindung, die mindestens eine gegenüber Isocyanatgruppen reaktive und mindestens eine zur Anionenbildung befähigte Gruppe im Molekül aufweist oder ein Gemisch aus solchen Verbindungen
(e) gegebenenfalls eine Verbindung, die mindestens eine gegenüber NCO-Gruppen reaktive Gruppe und mindestens eine Poly(oxyalkylen)gruppe im Molekül aufweist, oder ein Gemisch aus solchen Verbindungen und gegebenenfalls
(f) eine Hydroxyl- und/oder Aminogruppen enthaltende organische Verbindung mit einem Molekulargewicht von 60 bis 600, oder ein Gemisch aus solchen Verbindungen.

Das Polyurethanharz (B) soll ein zahlenmittleres Molekulargewicht von 200 bis 30.000, vorzugsweise 1000 bis 5000 und im statistischen Mittel pro Molekül 0,05 bis 1,1, vorzugsweise 0,2 bis 0,9, besonders bevorzugt 0,3 bis 0,7 polymerisierbare Doppelbindungen enthalten. Es ist bevorzugt, daß das Polyurethanharz (B) eine Säurezahl von 0 bis 2,0 aufweist. Das Molekulargewicht der Polyurethanharze kann - wie dem Fachmann bekannt - insbesondere durch das Mengenverhältnis und die Funktionalität der eingesetzten Ausgangsverbindungen (a) bis (f) gesteuert werden.

Die Polyurethanharze können sowohl in Substanz als auch in organischen Lösemitteln hergestellt werden.

Die Polyurethanharze können durch gleichzeitige Umsetzung aller Ausgangsverbindungen hergestellt werden. In vielen Fällen ist es jedoch zweckmäßig, die Polyurethanharze stufenweise herzustellen. So ist es zum Beispiel möglich, aus den Komponenten (a) und (b) ein isocyanatgruppenhaltiges Präpolymer herzustellen, das dann mit der Komponente (c) weiter umgesetzt wird. Weiter ist es möglich, aus den Komponenten (a), (b), (c) und gegebenenfalls (d) und (e) ein isocyanatgruppenhaltiges Präpolymer herzustellen, das dann mit der Komponente (f) zu höhermolekularen Polyurethanen umgesetzt werden kann. In den Fällen, in denen als Komponente (c) eine Verbindung eingesetzt wird, die nur eine gegenüber Isocyanatgruppen reaktive Gruppe enthält, kann in einer ersten Stufe aus (b) und (c) ein isocyanatgruppenhaltiges Vorprodukt hergestellt werden, das anschließend mit den weiteren Komponenten weiter umgesetzt werden kann.

Die Umsetzung der Komponenten (a) bis (f) wird zweckmäßigerweise in Gegenwart von Katalysatoren wie z.B. Dibutylzinndilaurat, Dibutylzinnmaleat, tertiäre Amine usw. durchgeführt.

Die einzusetzenden Mengen an Komponente (a), (b), (c), (d), (e) und (f) ergeben sich aus dem anzustrebenden zahlenmittleren Molekulargewicht und der anzustrebenden Säurezahl. Die polymerisierbaren Doppelbindungen können durch Einsatz von polymerisierbare Doppelbindungen aufweisende (a) Komponenten und/oder die Komponente (c) in die Polyurethanmoleküle eingeführt werden. Es ist bevorzugt, die polymerisierbaren Doppelbindungen über die Komponente (c) einzuführen.

Als Komponente (a) können gesättigte und ungesättigte Polyester- und/oder Polyetherpolyole, insbesondere Polyester- und/oder Polyetherdiole, mit einem zahlenmittleren Molekulargewicht von 400 bis 5000 eingesetzt werden. Geeignete Polyetherdiole sind z.B. Polyetherdiole der allgemeinen Formel H(-0-(CHR¹)ₙ-)ₘOH, wobei R¹ = Wasserstoff oder ein niedriger, gegebenenfalls substituierter Alkylrest ist, n = 2 bis 6, bevorzugt 3 bis 4 und m = 2 bis 100, bevorzugt 5 bis 50 ist. Als Beispiele werden lineare oder verzweigte Polyetherdiole wie Poly(oxyethylen)glykole, Poly(oxypropylen)glykole und Poly(oxybutylen)glykole genannt. Die ausgewählten Polyetherdiole sollen keine übermäßigen Mengen an Ethergruppen einbringen, weil sonst die gebildeten Polymere in Wasser anguellen. Die bevorzugten Polyetherdiole sind Poly(oxypropylen)glykole im Molmassenbereich Mₙ von 400 bis 3000.

Polyesterdiole werden durch Veresterung von organischen Dicarbonsäuren oder ihre Anhydriden mit organischen Diolen hergestellt oder leiten sich von einer Hydroxycarbonsäure oder einem Lacton ab. Um verzweigte Polyesterpolyole herzustellen, können in geringem Umfang Polyole oder Polycarbonsäure mit einer höheren Wertigkeit eingesetzt werden. Die Dicarbonsäuren und Diole können lineare oder verzweigte aliphatische, cycloaliphatische oder aromatische Dicarbonsäuren oder Diole sein.

Die zur Herstellung der Polyester verwendeten Diole bestehen beispielsweise aus Alkylenglykolen, wie Ethylenglykol, Propylenglykol, Butylenglykol, Butandiol-1,4, Hexandiol-1,6, Neopentylglykol und anderen Diolen, wie Dimethylolcyclohexan. Es können jedoch auch kleine Mengen an Polyolen, wie Trimethylolpropan, Glycerin, Pentaerythrit, zugesetzt werden. Die Säurekomponente des Polyesters besteht in erster Linie aus niedermolekularen Dicarbonsäuren oder ihren Anhydriden mit 2 bis 44, bevorzugt 4 bis 36 Kohlenstoffatomen im Molekül. Geeignete Säuren sind beispielsweise o-Phthalsäure, Isophthalsäure, Terephthalsäure, Tetrahydrophthalsäure, Cyclohexandicarbonsäure, Bernsteinsäure, Adipinsäure, Azelainsäure, Sebazinsäure, Maleinsäure, Fumarsäure, Glutarsäure, Hexachlorheptandicarbonsäure, Tetrachlorphthalsäure und/oder dimerisierte Fettsäuren. Anstelle dieser Säuren können auch ihre Anhydride, soweit diese existieren, verwendet werden. Bei der Bildung von Polyesterpolyolen können auch kleinere Mengen an Garbonsäuren mit 3 oder mehr Carboxylgruppen beispielsweise Trimellithsäureanhydrid oder das Addukt von Maleinsäureanhydrid an ungesättigte Fettsäuren anwesend sein.

Es können auch Polyesterdiole eingesetzt werden, die durch Umsetzung eines Lactons mit einem Diol erhalten werden. Sie zeichnen sich durch die Gegenwart von endständigen Hydroxylgruppen und wiederkehrenden Polyesteranteilen der Formel (-CO-(CHR²)ₙ-CH₂-0) aus. Hierbei ist n bevorzugt 4 bis 6 und der Substituent R² = Wasserstoff, ein Alkyl-, Cycloalkyl- oder Alkoxy-Rest. Kein Substituent enthält mehr als 12 Kohlenstoffatome. Die gesamte Anzahl der Kohlenstoffatome im Substituenten übersteigt 12 pro Lactonring nicht. Beispiele hierfür sind Hydroxycapronsäure, Hydroxybuttersäure, Hydroxydecansäure und/oder Hydroxystearinsäure.

Für die Herstellung der Polyesterdiole wird das unsubstituierte ε-Caprolacton, bei dem n den Wert 4 hat und alle R²-Substituenten Wasserstoff sind, bevorzugt. Die Umsetzung mit Lacton wird durch niedermolekulare Polyole wie Ethylenglykol, 1,3-Propandiol, 1,4-Butandiol, Dimethylolcyclohexan gestartet. Es können jedoch auch andere Reaktionskomponenten, wie Ethylendiamin, Alkyldialkanolamine oder auch Harnstoff mit Caprolacton umgesetzt werden. Als höhermolekulare Diole eignen sich auch Polylactamdiole, die durch Reaktion von beispielsweise ε-Caprolactam mit niedermolekularen Diolen hergestellt werden.

Wenn über die Komponente (a) polymerisierbare Doppelbindungen in die Polyurethanmoleküle eingeführt werden sollen, dann müssen (a) Komponenten eingesetzt werden, die polymerisierbare Doppelbindungen enthalten. Als Beispiele für solche (a) Komponenten werden Polyesterpolyole, vorzugsweise Polyesterdiole genannt, die unter Verwendung von polymerisierbare Doppelbindungen enthaltenden Polyolen und/oder Polycarbonsäuren hergestellt worden sind. Als Beispiele für polymerisierbare Doppelbindungen enthaltende Polyole werden genannt: Trimethylolpropanmonoallylether, Glycerinmonoallylether, Pentaerythritmono- und Pentaerythritdiallylether. Als Beispiele für polymerisierbare Doppelbindungen enthaltende Polycarbonsäuren werden Alkendicarbonsäuren, Maleinsäure und ungesättigte dimerisierte Fettsäuren genannt.

Als Komponente (b) können aliphatische und/oder cycloaliphatische und/oder aromatische Polyisocyanate eingesetzt werden. Als Beispiele für aromatische Polyisocyanate werden Phenylendiisocyanat, Toluylendiisocyanat, Xylylendiisocyanat, Biphenylendiisocyanat, Naphtylendiisocyanat und Diphenylmethandiisocyanat genannt.
Aufgrund ihrer guten Beständigkeit gegenüber ultraviolettem Licht ergeben (cyclo)aliphatische Polyisocyanate Produkte mit geringer Vergilbungsneigung. Beispiele für cycloaliphatische Polyisocyanate sind Isophorondiisocyanat, Cyclopentylendiisocyanat sowie die Hydrierungsprodukte der aromatischen Diisocyanate wie Cyclohexylendiisocyanat, Methylcyclohexylendiisocyanat und Dicyclohexylmethandiisocyanat. Aliphatische Diisocyanate sind Verbindungen der Formel

OCN-(CR³₂)r-NCO

worin r eine ganze Zahl von 2 bis 20, insbesondere 6 bis 8 ist und R³, das gleich oder verschieden sein kann, Wasserstoff oder einen niedrigen Alkylrest mit 1 bis 8 C-Atomen, vorzugsweise 1 oder 2 C-Atomen darstellt. Beispiele hierfür sind Trimethylendiisocyanat, Tetramethylendiisocyanat, Pentamethylendiisocyanat, Hexamethylendiisocyanat, Propylendiisocyanat, Ethylethylendiisocyanat, Dimethylethyldiisocyanat, Methyltrimethylendiisocyanat und Trimethylhexandiisocyanat. Als weiteres Beispiel für ein aliphatisches Diisocyanat wird Tetramethylxyloldiisocyanat genannt. Besonders bevorzugt werden als Diisocyanate Isophorondiisocyanat und Dicyclohexylmethandiisocyanat genannt.

Die Komponente (b) muß hinsichtlich der Funktionalität der Polyisocyanate so zusammengesetzt sein, daß kein vernetztes Polyurethanharz erhalten wird. Die Komponente (b) kann neben Diisocyanaten auch einen Anteil an Polyisocyanaten mit Funktionalitäten über zwei - wie z.B. Triisocyanate - enthalten.

Als Triisocyanate haben sich Produkte bewährt, die durch Trimerisation oder Oligomerisation von Diisocyanaten oder durch Reaktion von Diisocyanaten mit polyfunktionellen OH- oder NH-Gruppen enthaltenden Verbindungen entstehen. Hierzu gehören beispielsweise das Biuret von Hexamethylendiisocyanat und Wasser, das Isocyanurat des Hexamethylendiisocyanats oder das Addukt von Isophorondiisocyanat an Trimethylolpropan. Die mittlere Funktionalität kann gegebenenfalls durch Zusatz von Monoisocyanaten gesenkt werden. Beispiele für solche kettenabbrechenden Monoisocyanate sind Phenylisocyanat, Cyclohexylisocyanat und Stearylisocyanat.

Die Komponente (c) dient zur Einführung von polymerisierbaren Doppelbindungen in die Polyurethanharzmoleküle. Es ist bevorzugt, als Komponente (c) eine Verbindung einzusetzen, die mindestens zwei gegenüber NCO-Gruppen reaktive Gruppen und eine polymerisierbare Doppelbindung enthält. Besonders bevorzugt werden als Komponente (c) Verbindungen eingesetzt, die neben einer polymerisierbaren Doppelbindung noch zwei gegenüber NCO-Gruppen reaktive Gruppen enthalten. Als Beispiele für gegenüber NCO-Gruppen reaktive Gruppen werden -OH, -SH, > NH und -NH₂-Gruppen genannt, wobei -OH, > NH und -NH₂-Gruppen bevorzugt sind. Als Beispiele für Verbindungen, die als Komponente (c) eingesetzt werden können, werden genannt: Hydroxy(meth)acrylate, insbesondere Hydroxyalkyl(meth)acrylate wie Hydroxyethyl-, Hydroxypropyl-, Hydroxybutyl- oder Hydroxyhexyl(meth)acrylat und 2,3-Dihydroxypropyl(meth)acrylat, 2,3-Dihydroxypropylmonoallylether, 2,3-Dihydroxypropansäureallylester, Glycerinmono(meth)acrylat, Glycerinmonoallylether, Pentaerythritmono(meth)acrylat, Pentaerythritdi(meth)acrylat, Pentaerythritmonoallylether, Pentaerythritdiallylether, Trimethylolpropanmonoallylether, Trimethylpropanmono(meth)acrylat und Trimethylolpropandiallylether. Als Komponente (c) wird vorzugsweise Trimethylolpropanmonoallylether, Glycerinmono(meth)acrylat, Pentaerythritdi(meth)acrylat, Pentaerythritdiallylether, Glycerinmonoallylether und Trimethylolpropanmono(meth)acrylat eingesetzt. Als Komponente (c) werden besonders bevorzugt Trimethylolpropanmonoallylether, Glycerinmonoallylether und 2,3-Dihydroxypropansäureallylester eingesetzt. Es ist bevorzugt, die (c) Komponenten, die mindestens zwei gegenüber NCO-Gruppen reaktive Gruppen enthalten, kettenständig (nicht endständig) in die Polyurethanmoleküle einzubauen.

Die Einführung von zur Anionenbildung befähigten Gruppen in die Polyurethanmoleküle erfolgt über den Einbau von Verbindungen (d) in die Polyurethanmoleküle, die mindestens eine gegenüber Isocyanatgruppen reaktive und eine zur Anionenbildung befähigte Gruppe im Molekül enthalten.

Die Menge an einzuzusetzender Komponente (d) kann aus der angestrebten Säurezahl berechnet werden.

Als Komponente (d) werden vorzugsweise Verbindungen eingesetzt, die zwei gegenüber Isocyanatgruppen reaktive Gruppen im Molekül enthalten. Geeignete gegenüber Isocyanatgruppen reaktive Gruppen sind insbesondere Hydroxylgruppen, sowie primäre und/oder sekundäre Aminogruppen. Geeignete zur Anionenbildung befähigte Gruppen sind Carboxyl-, Sulfonsäure- und/oder Phosphonsäuregruppen, wobei Carboxylgruppen bevorzugt sind. Als Komponente (d) können beispielsweise Alkansäuren mit zwei Substituenten am α-ständigem Kohlenstoffatom eingesetzt werden. Der Substituent kann eine Hydroxylgruppe, eine Alkylgruppe oder bevorzugt eine Alkylolgruppe sein. Diese Alkansäuren haben mindestens eine, im allgemeinen 1 bis 3 Carboxylgruppen im Molekül. Sie haben zwei bis etwa 25, vorzugsweise 3 bis 10 Kohlenstoffatome. Beispiele für die Komponente (d) sind Dihydroxypropionsäure, Dihydroxybernsteinsäure und Dihydroxybenzoesäure. Eine besonders bevorzugte Gruppe von Alkansäuren sind die α,α-Dimethylolalkansäuren der allgemeinen Formel
R⁴-C(CH₂OH)₂COOH, wobei
R⁴ für ein Wasserstoffatom oder eine Alkylgruppe mit bis zu etwa 20 Kohlenstoffatomen steht.

Beispiele für solche Verbindungen sind 2,2-Dimethylolessigsäure, 2,2-Dimethylolpropionsäure, 2,2-Dimethylolbuttersäure und 2,2-Dimethylolpentansäure. Eie bevorzugte Dihydroxyalkansäure ist 2,2-Dimethylolpropionsäure. Aminogruppenhaltige Verbindungen sind beispielsweise α,δ-Diaminovaleriansäure, 3,4-Diaminobenzoesäure, 2,4-Diaminotoluolsulfonsäure und 2,4-Diamino-diphenylethersulfonsäure.

Mit Hilfe der Komponente (e) können Poly(oxyalkylen)-gruppen als nichtionische stabilisierende Gruppen in die Polyurethanmoleküle eingeführt werden. Als Komponente (e) können beispielsweise eingesetzt werden Alkoxypoly(oxyalkylen)alkohole mit der allgemeinen Formel R'0-(-CH₂-CHR''-0-)ₙ H in der R' für einen Alkylrest mit 1 bis 6 Kohlenstoffatomen, R'' für ein Wasserstoffatom oder einen Alkylrest mit 1 bis 6 Kohlenstoffatomen und n für eine Zahl zwischen 20 und 75 steht.

Der Einsatz der Komponente (f) führt zur Molekulargewichtserhöhung der Polyurethanharze. Als Komponente (f) können beispielsweise Polyole mit bis zu 36 Kohlenstoffatomen je Molekül wie Ethylenglykol, Diethylenglykol, Triethylenglykol, 1,2-Propandiol, 1,3-Propandiol, 1,4-Butandiol, 1,2-Butylenglykol, 1,6-Hexandiol, Trimethylolpropan, Ricinusöl oder hydriertes Ricinusöl, Di-trimethylolpropanether, Pentaerythrit, 1,2-Cyclohexandiol, 1,4-Cyclohexandimethanol, Bisphenol A, Bisphenol F, Neopentylglykol, Hydroxypivalinsäure-neopentylglykolester, hydroxyethyliertes oder hydroxypropyliertes Bisphenol A, hydriertes Bisphenol A und deren Mischungen eingesetzt werden. Die Polyole werden im allgemeinen in Mengen von bis zu 30 Gewichtsprozent, vorzugsweise 2 bis 20 Gewichtsprozent, bezogen auf die eingesetzte Menge an Komponente (a) und (f) eingesetzt.

Als Komponente (f) können auch Di- und/oder Polyamine mit primären und/oder sekundären Aminogruppen eingesetzt werden. Polyamine sind im wesentlichen Alkylen-Polyamine mit 1 bis 40 Kohlenstoffatomen, vorzugsweise etwa 2 bis 15 Kohlenstoffatomen. Sie können Substituenten tragen, die keine mit Isocyanat-Gruppen reaktionsfähige Wasserstoffatome haben. Beispiele sind Polyamine mit linearer oder verzweigter aliphatischer, cycloaliphatischer oder aromatischer Struktur und wenigstens zwei primären Aminogruppen. Als Diamine sind zu nennen Hydrazin, Ethylendiamin, Propylendiamin, 1,4-Butylendiamin, Piperazin, 1,4-Cyclohexyldimethylamin, Hexamethylendiamin-1,6, Trimethylhexamethylendiamin, Menthandiamin, Isophorondiamin, 4,4'-Diaminodicyclohexylmethan und Aminoethylethanolamin. Bevorzugte Diamine sind Hydrazin, Alkyl- oder Cycloalkyldiamine wie Propylendiamin und 1-Amino-3-aminomethyl-3,5,5-trimethylcyclohexan. Es können auch Polyamine als Komponente (f) eingesetzt werden, die mehr als zwei Aminogruppen im Molekül enthalten. In diesen Fällen ist jedoch - z.B. durch Mitverwendung von Monoaminen - darauf zu achten, daß keine vernetzten Polyurethanharze erhalten werden. Solche brauchbaren Polyamine sind Diethylentriamin, Triethylentetramin, Dipropylendiamin und Dibutylentriamin. Als Beispiel für ein Monoamin wird Ethylhexylamin genannt.

Die erfindungsgemäß eingesetzten Bindemittel werden hergestellt, indem eine Lösung des Polyurethanharzes (B) in einem organischen Lösemittel bzw. einem organischen Lösemittelgemisch bereitgestellt wird und in dieser Lösung ethylenisch ungesättigte Monomere oder ein Gemisch ethylenisch ungesättigter Monomere in einer radikalischen Polymerisation polymerisiert werden und das so erhaltene Reaktionsprodukt in eine wäßrige Dispersion überführt wird. Es ist bevorzugt, wassermischbare organische Lösemittel einzusetzen. Als Beispiele für brauchbare Lösemittel werden Butylglykol, 2-Methoxypropanol, n-Butanol, Methoxybutanol, n-Propanol, Ethylenglykolmonomethylether, Ethylenglykolmonoethylether, Ethylenglykolmonobutylether, Diethylenglykolmonomethylether, Diethylenglykolmonoethylether, Diethylenglykoldiethylether, Diethylenglykolmonobutylether und 3-Methyl-3-methoxybutanol oder Mischungen aus diesen Lösemitteln genannt.

Bevorzugt werden Ketone, wie z.B. Aceton, Methylethylketon, Diethylketon und Methylisobutylketon.

Die radikalische Polymerisation wird bei Temperaturen von 80 bis 160°C, vorzugsweise 100 bis 160°C in den oben genannten organischen Lösemitteln bzw. Lösemittelgemischen durchgeführt.

Als Beispiele für brauchbare Polymerisationsinitiatoren werden freie Radikale bildende Initiatoren, wie z.B. Benzoylperoxid, Azobisisobutyronitril und t-Butylperbenzoat genannt.

Bei der Polymerisation kommt es auch zu Pfropfungsreaktionen zwischen dem Polyurethanharz (B) und der Komponente (A). Die Komponenten (A) und (B) werden in einem Gewichtsverhältnis von 1 : 10 bis 10 : 1, vorzugsweise 1 : 2 bis 2 : 1, besonders bevorzugt 1 : 1 eingesetzt.

Als ethylenisch ungesättigte Monomere können praktisch alle radikalisch polymerisierbaren Monomere eingesetzt werden, wobei jedoch die üblichen Einschränkungen für Copolymerisationen gelten, die durch das Q- und e-Schema nach Alfrey und Price bzw. durch die Copolymerisationsparameter vorgegeben sind (vgl. z.B. Brandrup und Immergut, Polymer Handbook, 2nd ed. John Wiley + Sons, New York (1975)).

Als ethylenisch ungesättigte Monomeren können eingesetzt werden:
(i) aliphatische oder cycloaliphatische Ester der Acrylsäure oder Methacrylsäure oder ein Gemisch aus solchen Estern und
(ii) mindestens eine Hydroxylgruppe im Molekül tragende ethylenisch ungesättigte Monomere oder ein Gemisch aus solchen Monomeren und
(iii) mindestens eine Carboxylgruppe im Molekül tragende ethylenisch ungesättigte Monomere oder ein Gemisch aus solchen Monomeren und
(iv) weitere von (i), (ii) und (iii) verschiedene ethylenisch ungesättigte Monomere oder ein Gemisch aus solchen Monomeren sowie
(v) polyungesättigte Monomere, insbesondere ethylenisch polyungesättigte Monomere.

Die oben genannten Monomere werden vorzugsweise als Mischungen eingesetzt, wobei die Komponente (i) in einer Menge von 40 bis 100, vorzugsweise 60 bis 90 Gew.-%, die Komponente (ii) in einer Menge von 0 bis 20, vorzugsweise 3 bis 12 Gew.-%, die Komponente (iii) in einer Menge von 0 bis 30, vorzugsweise 5 bis 15 Gew.-%, die Komponente (iv) in einer Menge von 0 bis 30, vorzugsweise 0 bis 10 Gew.-% und die Komponente (v) in einer Menge von 0 bis 5, vorzugsweise 0 Gew.-% eingesetzt wird, wobei die Summe der Gewichtsanteile von (i), (ii), (iii), (iv) und (v) stets 100 Gew.-% ergibt.

Als Komponente (i) können z.B. eingesetzt werden: Cyclohexylacrylat, Cyclohexylmethacrylat, Alkylacrylate und Alkylmethacrylate mit bis zu 20 Kohlenstoffatomen im Alkylrest, wie z.B. Methyl-, Ethyl-, Propyl-, Butyl-, Hexyl-, Ethylhexyl-, Stearyl- und Laurylacrylat und -methacrylat oder Gemische aus diesen Monomeren.

Als Komponente (ii) können z.B. eingesetzt werden: Hydroxyalkylester der Acrylsäure, Methacrylsäure oder einer anderen α,β-ethylenisch ungesättigten Carbonsäure. Diese Ester können sich von einem Alkylenglykol ableiten, das mit der Säure verestert ist, oder sie können durch Umsetzung der Säure mit einem Alkylenoxid erhalten werden. Als Komponente (ii) werden vorzugsweise Hydroxyalkylester der Acrylsäure und Methacrylsäure, in denen die Hydroxyalkylgruppe bis zu 4 Kohlenstoffatome enthält, oder Mischungen aus diesen Hydroxyalkylestern eingesetzt. Als Beispiele für derartige Hydroxyalkylester werden 2-Hydroxyethylacrylat, 2-Hydroxypropylacrylat, 2-Hydroxypropylmethacrylat, 3-Hydroxypropylacrylat, 3-Hydroxypropylmethacrylat, 2-Hydroxyethylmethacrylat, 3-Hydroxybutylacrylat oder 4-Hydroxybutyl(meth)acrylat genannt. Entsprechende Ester von anderen ungesättigten Säuren, wie Z.B. Ethacrylsäure, Crotonsäure und ähnliche Säuren mit bis zu etwa 6 Kohlenstoffatomen pro Molekül können auch eingesetzt werden.

Als Komponente (iii) werden vorzugsweise Acrylsäure und/oder Methacrylsäure eingesetzt. Es können aber auch andere ethylenisch ungesättigte Säuren mit bis zu 6 Kohlenstoffatomen im Molekül eingesetzt werden. Als Beispiele für solche Säuren werden Ethacrylsäure, Crotonsäure, Maleinsäure, Fumarsäure und Itaconsäure genannt.

Als Komponente (iv) können z.B. eingesetzt werden: vinylaromatische Kohlenwasserstoffe, wie Styrol, α-Alkylstyrol und Vinyltoluol, Acryl- und Methacrylamid und Acryl- und Methacrylnitril oder Gemische aus diesen Monomeren.

Als Komponenten (v) können Verbindungen eingesetzt werden, die mindestens zwei radikalisch polymerisierbare Doppelbindungen im Molekül enthalten. Als Beispiele werden genannt: Divinylbenzol, p-Methyldivinylbenzol, o-Nonyldivinylbenzol, Ethandioldi(meth)acrylat, 1,4 Butandioldi(meth)acrylat, 1,6 Hexandiol-di(meth)acrylat, Trimethylolpropantri(meth)acrylat, Pentaerythritdi(meth)acrylat, Allylmethacrylat, Diallylphthalat, Butandioldivinylether, Divinylethylenharnstoff, Divinylpropylenharnstoff, Maleinsäurediallylester usw.

Bevorzugt wird der Einsatz von difunktionellen ungesättigten Monomeren wie Butandioldiacrylat oder Hexandioldiacrylat. Bei Verwendung von Glycidylmethacrylat und Methacrylsäure entsteht das entsprechende Glycerindimethacrylat automatisch bei der Polymerisation. Die Art und Menge an polyungesättigten Monomeren ist mit den Reaktionsbedingungen (Katalysatoren, Reaktionstemperatur, Löesemittel) sorgfältig abzustimmen, um keine Gelierung zu erhalten. Die zugesetzte Menge an polyungesättigten Monomeren dient dazu, ohne Gelbildungen die mittlere Molmasse anzuheben. Bevorzugt ist es jedoch, kein polyungesättigtes Monomeres zuzusetzen.

Die erfindungsgemäß eingesetzten, aus (A) und (B) hergestellten Polymere müssen zur Anionenbildung befähigte Gruppen enthalten, die vor oder während der Überführung der Polymere aus dem organischen Lösemittel bzw. Lösemittelgemisch in Wasser neutralisiert werden und die Bildung stabiler wäßriger Dispersionen ermöglichen. Die in Rede stehenden Polymere können neben den zur Anionenbildung befähigten Gruppen auch noch nichtionische stabilisierende Gruppen wie z.B. Poly(oxyalkylen)gruppen, insbesondere Poly(oxyethylen)- und/oder Poly(oxypropylen)und/oder Poly(oxyethylen) (oxypropylen)gruppen enthalten.

Die Menge der in den erfindungsgemäß eingesetzten, aus (A) und (B) hergestellten Polymeren enthaltenen zur Anionenbildung befähigten Gruppen soll so hoch sein, daß die Polymere eine Säurezahl von 5 bis 200, vorzugsweise 10 bis 40, besonders bevorzugt 15 bis 30 aufweisen. Die Einführung der zur Anionenbildung befähigten Gruppen in die in Rede stehenden Polymere kann beispielsweise über die Komponenten (d) und (iii) erfolgen. Die zur Anionenbildung befähigten Gruppen können ausschließlich in der Komponente (A) oder ausschließlich in der Komponente (B) oder sowohl in der Komponente (A) als auch in der Komponente (B) enthalten sein. Es ist bevorzugt, daß 50 bis 100, vorzugsweise 70 bis 100, besonders bevorzugt 100 % der zur Anionenbildung befähigten Gruppen in der Komponente (A) enthalten sind.

Die Einführung von Poly(oxyalkylen)gruppen in die erfindungsgemäßen Polymere kann über die Komponente (e) oder über ethylenisch ungesättigte Monomere, die mindestens eine Poly(oxyalkylen)gruppe enthalten (z.B. Poly(oxyethylen)(meth)acrylate) erfolgen. Die erfindungsgemäßen Polymere sollten keine übermäßigen Mengen an Poly(oxyalkylen)gruppen enthalten, weil sonst die Feuchtigkeitsbeständigkeit der Lackfilme herabgesetzt werden kann. Der Gehalt an Poly(oxyalkylen)gruppen kann bei 1 bis 10 Gew.-%, vorzugsweise 1 bis 5 Gew.-% (bezogen auf das Gewicht des aus (A) und (B) hergestellten Polymers) liegen.

Die erfindungsgemäß eingesetzten, aus (A) und (B) hergestellten Polymere sollten vorzugsweise keine nichtionischen stabilisierenden Gruppen enthalten.

Die aus (A) und (B) hergestellten Polymere sollen vorzugsweise eine Hydroxylzahl von 0 bis 100, besonders bevorzugt 20 bis 80 aufweisen. Das zahlenmittlere Molekulargewicht der Polymere soll vorzugsweise 2000 bis 20.000, besonders bevorzugt 5000 bis 12.000 betragen.

Besonders bevorzugte Polymere sind die aus (A) und (B) hergestellten Polymere, die einen Polymolekularitätsindex Q von 5 bis 90, vorzugsweise 10 bis 30 aufweisen. Der Polymolekularitätsindex ist der Quotient M_{W} : Mₙ, wobei M_{W} für das gewichtsmittlere und Mₙ für das zahlenmittlere Molekulargewicht steht.

Der Polymolekularitätsindex kann beispielsweise durch gezielten Einsatz von Reglern und die Art der eingesetzten Lösemittel beeinflußt werden. Außerdem wird Q durch den in der Komponente (B) enthaltenen Gehalt an polymerisierbaren Doppelbindungen beeinflußt. Q wird größer, je kleiner die Menge an eingesetztem Regler und die Menge an eingesetzten Lösemitteln, die als Regler fungieren können, ist. Je geringer der Gehalt an polymerisierbaren Doppelbindungen in der Komponente (B) ist, desto größer wird Q.
Q kann bestimmt werden durch Gelpermeationschromatographie unter Verwendung eines Polystyrolstandards.

Nach Beendigung der Polymerisation der Komponente (A) wird das erhaltene Polymer zumindest teilweise neutralisiert und in Wasser dispergiert.

Zur Neutralisation können sowohl organische Basen als auch anorganische Basen, wie Ammoniak und Hydrazin, verwendet werden. Vorzugsweise werden primäre, sekundäre und tertiäre Amine, wie z.B. Ethylamin, Propylamin, Dimethylamin, Dibutylamin, Cyclohexylamin, Benzylamin, Morpholin, Piperidin und Triethanolamin verwendet. Besonders bevorzugt werden tertiäre Amine als Neutralisationsmittel eingesetzt, insbesondere Dimethylethanolamin, Triethylamin, Tripropylamin und Tributylamin.

Aus den erhaltenen wäßrigen Bindemitteldispersionen kann gegebenenfalls ein Teil oder vorzugsweise das gesamte organische Lösemittel abdestilliert werden. Die Bindemitteldispersionen enthalten Polymerteilchen, deren mittlere Teilchengröße zwischen 10 und 500 nm, vorzugsweise zwischen 60 bis 150 nm liegt (Meßmethode: Laserlichtstreuuung, Meßgerät: Malvern Autosizer 2 C).

Aus den in Rede stehenden Bindemitteldispersionen können nach allgmein gut bekannten Methoden wäßrige Lacke, insbesondere wäßrige Uni- und wäßrige Metallic-Basislacke hergestellt werden. Die Basislacke sind auch für Reparaturzwecke verwendbar und können sowohl mit wäßrigen als auch mit konventionellen Klarlacken und Pulverlacken überlackiert werden.

Die Basislacke können neben den erfindungsgemäßen Bindemitteln noch weitere verträgliche wasserverdünnbare Kunstharze, wie z.B. Aminoplastharze, Polyurethanharze, Polyacrylatharze, Polyester und Polyether enthalten.

Die Basislacke enthalten vorzugsweise 5 bis 90, besonders bevorzugt 40 bis 70 Gew.-% des erfindungsgemäßen Bindemittels, wobei die Gewichtsprozentangaben auf den Gesamtfeststoffgehalt der Basislacke bezogen sind.

Als Pigmente können die erfindungsgemäßen Basislacke farbgebende Pigmente auf anorganischer Basis, wie z.B. Titandioxid, Eisenoxid, Ruß usw., farbgebende Pigmente auf organischer Basis sowie übliche Metallpigmente (z.B. handelsübliche Aluminiumbronzen, Edelstahlbronzen) und nicht-metallische Effektpigmente (z.B. Perlglanz bzw. Interferenzpigmente) enthalten. Die Pigmentierungshöhe liegt in üblichen Bereichen. Ein besonderer Vorteil der erfindungsgemäß eingesetzten Bindemittel besteht darin, daß sie auch als Anreibeharz eingesetzt werden können und sehr stabile Pigmentpasten liefern.

Weiterhin können den erfindungsgemäßen Basislacken vernetzte polymere Mikroteilchen, wie sie z.B. in der EP-A-38 127 offenbart sind und/oder übliche anorganische oder organische Additive zugesetzt werden. So wirken als Verdicker beispielsweise wasserlösliche Celluloseether, wie Hydroxyethylcellulose, Methylcellulose oder Carboxymethylcellulose sowie synthetische Polymere mit ionischen und/oder assoziativ wirkenden Gruppen, wie Polyvinylalkohol, Poly(meth)acrylamid, Poly(meth)acrylsäure, Polyvinylpyrrolidon, Styrol-Maleinsäureanhydrid oder Ethylen-Maleinsäureanhydrid-Copolymere und ihre Derivate oder auch hydrophob modifizierte ethoxylierte Urethane oder Polyacrylate sowie carboxylgruppenhaltige Polyacrylat-Copolymere mit einer Säurezahl von 60 bis 780, bevorzugt 200 bis 500.

Die erfindungsgemäßen Basislacke weisen im allgemeinen einen Festkörpergehalt von etwa 15 bis 50 Gew.-% auf. Der Festkörpergehalt variiert mit dem Verwendungszweck der Beschichtungszusammensetzungen. Für Metalliclacke liegt er beispielsweise bevorzugt bei 17 bis 25 Gew.-%. Für unifarbige Lacke liegt er höher, beispielsweise bei 30 bis 45 Gew.-%.
Die erfindungsgemäßen Lacke können zusätzlich übliche organische Lösemittel enthalten. Deren Anteil wird möglichst gering gehalten. Er liegt beispielsweise unter 15 Gew.-%.

Die erfindungsgemäßen Basislacke werden im allgemeinen auf einen pH-Wert zwischen 6,5 und 9,0 eingestellt. Der pH-Wert kann mit üblichen Aminen, wie z.B. Ammoniak, Triethylamin, Dimethylaminoethanol und N-Methylmorpholin eingestellt werden.

Die erfindungsgemäßen Basislacke können mit wäßrigen, konventionellen oder Pulverklarlacken überlackiert werden.

Mit der Bereitstellung der erfindungsgemäßen Basislacke wird die eingangs erläuterte Aufgabenstellung gelöst.

Mit den erfindungsgemäßen Basislacken können auch ohne Überlackierung mit einem transparenten Decklack gualitativ hochwertige Lackierungen hergestellt werden. Die so erhaltenen einschichtigen Lackierungen zeichnen sich insbesondere durch einen hohen Glanz, gute mechanisch-technologische Eigenschaften und hohe Schwitzwasserbeständigkeit aus.

Die erfindungsgemäßen wäßrigen Lacke können auf beliebige Substrate, wie z.B. Metall, Holz, Kunststoff oder Papier aufgebracht werden. Der Auftrag kann direkt erfolgen oder, wie in der Autoindustrie üblich, nach Aufbringen einer Elektrotauchgrundierung und eines Füllers.

Die erfindungsgemäßen Lacke können durch Spritzen, Rakeln, Tauchen, Walzen, vorzugsweise durch elektrostatisches und pneumatisches Spritzen appliziert werden.

In den folgenden Beispielen wird die Erfindung näher erläutert. Alle Angaben zu Prozenten und Teilen sind Gewichtsangaben, wenn nicht ausdrücklich etwas anderes angegeben wird.

### 1. Herstellung erfindungsgemäßer Bindemitteldispersionen

### 1.1 Bindemitteldispersion A

In einem 5 l Reaktionsgefäß mit Rührer, Rückflußkühler und 2 Zulaufgefäßen werden zu einer Mischung aus 336 g eines Polyesters mit einem zahlenmittleren Molekulargewicht von 630 auf Basis Adipinsäure, Hexandiol und Neopentylglykol (Molverhältnis 1 : 0,5 : 1), 31 g Neopentylglykol, 27,8 g Trimethylolpropanmonoallylether, 0,45 g Dibutylzinndilaurat und 279,7 g Methylethylketon, 275 g Isophorondiisocyanat gegeben. Das Reaktionsgemisch wird anschließend unter Stickstoffatmosphäre auf eine Temperatur von 80°C erhitzt. Bei einem NCO-Gehalt von 2,2 % werden 66,7 g Trimethylolpropan zu dem Reaktionsgemisch gegeben und die Reaktion weitergeführt bis keine Isocyanatgruppen mehr nachgewiesen werden können. Danach werden 248,9 g Methylethylketon hinzugefügt.

Bei einer Temperatur von 82°C wird anschließend ein Gemisch aus 312,5 g n-Butylacrylat, 312,5 g Methylmethacrylat, 74,7 g Hydroxypropylmethacrylat und 58,4 g Acrylsäure innerhalb von 3 Stunden zu dem Reaktionsgemisch gegeben. Gleichzeitig werden 175 g einer 13-prozentigen Lösung von 2,2'-Azobis(methylbutyronitril) in Methylethylketon innerhalb von 3,5 Stunden zudosiert.
Nach weiteren 2,5 Stunden bei 82°C werden 56,9 g Dimethylethanolamin und 2242 g deionisiertes Wasser zugegeben.
Nach Entfernung des Methylethylketons im Vakuum erhält man eine 40-prozentige wäßrige koagulatfreie Dispersion mit einem pH-Wert von 8,1 und einem mittlerem Teilchendurchmesser von 100 nm.

### 1.2 Bindemitteldispersion B

In einem 5 l Reaktionsgefäß mit Rührer, Rückflußkühler und 2 Zulaufgefäßen werden zu einer Mischung aus 353,5 g eines Polyesters mit einem zahlenmittleren Molekulargewicht von 630 auf Basis Adipinsäure, Maleinsäureanhydrid, Hexandiol und Ethylbutylpropandiol-1,3 (Molverhältnis 0,9 : 0,1 : 0,5 : 1), 39,4 g Neopentylglykol, 18,0 g Trimethylolpropanmonoallylether, 0,45 g Dibutylzinndilaurat und 330 g Methylisobutylketon, 289,5 g Isophorondiisocyanat gegeben.

Das Reaktionsgemisch wird anschließend unter Stickstoffatmosphäre auf eine Temperatur von 105°C erhitzt. Bei einem NCO-Gehalt von 2,2 % werden 69,6 g Trimethylolpropan zu dem Beaktionsgemisch gegeben.
Bei einem Rest-NCO-Gehalt von < 0,05 % werden 150,2 g Methylisobutylketon hinzugefügt.
Bei einer Temperatur von 105°C wird anschließend ein Gemisch aus 417,4 g n-Butylacrylat, 217,4 g Methylmethacrylat, 75,9 g Hydroxypropylmethacrylat und 59,4 g Acrylsäure innerhalb von 3 Stunden zu dem Reaktionsgemisch gegeben. Gleichzeitig werden 179,9 g einer 11,7 prozentigen Lösung von tertiär-Butylperethylhexanoat in Methylisobutylketon innerhalb von 3,5 Stunden zudosiert.
Nach weiteren 2,5 Stunden bei 105°C werden 51,3 g Dimethylethanolamin und 2310 g deionisiertes Wasser zugegeben.
Nach Entfernung des Methylisobutylketons im Vakuum erhält man eine 43 prozentige wäßrige koagulatfreie Dispersion mit einem pH-Wert von 7,9 und einem mittlerem Teilchendurchmesser von 100 nm.

### 1.3 Bindemitteldispersion C

In einem 6 l Reaktionsgefäß mit Rührer, Rückflußkühler und 2 Zulaufgefäßen werden zu einer Mischung aus 348,8 g eines Polyesters mit einem zahlenmittleren Molekulargewicht von 630 auf Basis Adipinsäure, Hexandiol und Ethylbutylpropandiol-1,3 (Molverhältnis 1 : 0,5 : 1), 41,4 g Dimethylolpropionsäure, 28,9 g Trimethylolpropanmonallylether und 330,9 g Methylethylketon, 285,4 g Isophorondiisocyanat gegeben.
Das Rekationsgemisch wird anschließend unter Stickstoffatmosphäre auf eine Temperatur von 80°C erhitzt. Bei einem NCO-Gehalt von 2,1 % werden 67,4 g Trimethylolpropan zu dem Reaktionsgemisch gegeben.
Bei einer Reaktionstemperatur von 82°C wird anschließend ein Gemisch aus 320,6 g n-Butylacrylat, 362 g Methylmethacrylat, 76,7 g Hydroxypropylmethacrylat und 27,3 g Acrylsäure innerhalb von 3 Stunden zugegeben. Gleichzeitig werden 186,4 g einer 12 prozentigen Lösung von 2,2'-Azobis(methylbutyronitril) in Methylethylketon innerhalb von 3,5 Stunden zudosiert.
Nach weiteren 2,5 Stunden bei 105°C werden 50,9 g Dimethylethanolamin und 3480,2 g deionisiertes Wasser zugegeben.
Nach Entfernung des Methylisobutylketons im Vakuum erhält man eine 30 prozentige wäßrige koagulatfreie Dispersion mit einem pH-Wert von 7,9 und einem mittlerem Teilchendurchmesser von 70 nm.

### 2. Herstellung erfindungsgemäßer Basislacke

### Basislack 1

200 g Bindemitteldispersion A werden mit 59 g Wasser, 40 g Butyldiglykol und 256 g eines Weißpigmentes (Titandioxid) im Dissolver 15 min lang bei 21 m/sec. vordispergiert und anschließend 30 min auf einer Perlmühle bei max. 50°C vermahlen.
Zu 619 g des oben beschriebenen Mahlgutes werden weitere 200 g der oben beschriebenen Bindemitteldispersion A, 55 g eines handelsüblichen Melaminharzes sowie 66 g vollentsalztes Wasser unter Rühren hinzugefügt.

### Basislacke 2 und 3

Es wird analog zur Herstellung des Basislackes 1 verfahren. Nähere Angaben sind in Tabelle 1 aufgelistet.

**Tabelle 1**

| | Basislack 2 | Basislack 3 |
|---|---|---|
| Bindemitteldispersion B | 300,0 g | - |
| Bindemitteldispersion C | - | 560,0 g |
| Wasserlöslicher Polyester1) | 80,0 g | - |
| Tensid2) | 4,0 g | 4,0 g |
| Weißpigment | - | 256,0 g |
| Ruß | 30,0 g | - |
| Butyldiglykol | 40,0 g | 50,0 g |
| Melamin-Formaldehyd-Harz3) | 60,0 g | 58,0 g |
| Vollentsalztes Wasser | 486,0 g | 72,0 g |

| | | |
|---|---|---|
| 1) Polyester mit zahlenmittlerem Molekulargewicht von 1900 und einer Säurezahl von 30 auf Basis Neopentylglykol, Isophthalsäure, Trimellithsäureanhydrid (Molverhältnis 2 : 1 : 0,75) (60 %ige Lösung in Butanol/Wasser 1 : 1). | | |
| 2) 50 %ige Lösung von Tensid S (Handelsprodukt von Air Products) in Butylglykol. | | |
| 3) Luwipal 072, Handelsprodukt der BASF AG. | | |

### 3.Herstellung von basecoat-clearcoat Lackierungen unter Verwendung der erfindungsgemäßen Basislacke

Die erfindungsgemäßen Basislacke werden durch elektrostatisches Verspritzen so auf mit einem handelsüblichen Elektrotauchlack und mit einem handelsüblichen Füller beschichtete zinkphosphatierte Karosseriebleche lackiert, daß Lackfilme mit Trockenfilmdicken (je nach Farbton) von 12 bis 30 µm erhalten werden. Nach kurzer Abdunstzeit wird mit einem handelsüblichen Klarlack überlackiert und 30 Minuten bei 130°C eingebrannt. Ein so lackiertes Blech wird nochmals mit dem erfindungsgemäßen Basislack und nach kurzer Ablüftzeit mit einem handelsüblichen 2 Komponenten Reparaturlack überlackiert und 30 Minuten bei 90°C getrocknet. Die Trockenfilmdicken der Klarlacke betragen ca. 40 µm. Es werden Lackierungen mit gutem Verlauf, hoher Brillianz und sehr guten mechanischen Eigenschaften erhalten.
Die lackierten Bleche zeigen nach 240-stündiger Belastung im Schwitzwasserkonstantklima nach SK DIN 50017 keine Veränderungen auf der Lackoberfläche. Eine anschließend durchgeführte Haftungsprüfung nach DIN 53 151 ergibt den Wert 0. Ein anschließend durchgeführter Beschuß mit 1000 g kantigem Hartgüßstrahlmittel (4 - 5 mm Durchmesser) in einem Erichsen Steinschlaggerät 508 nach VDA führte nur zu geringfügigen Abplatzungen.

## Patentansprüche

1. Verfahren zur Herstellung einer mehrschichtigen Lackierung auf einer Substratoberfläche, bei dem
(1) ein pigmentierter wäßriger Basislack auf die Substratoberfläche aufgebracht wird
(2) aus der in Stufe (1) aufgebrachten Zusammensetzung ein Polymerfilm gebildet wird
(3) auf der so erhaltenen Basisschicht ein transparenter Decklack aufgebracht wird und anschließend
(4) die Basisschicht zusammen mit der Deckschicht eingebrannt wird,
dadurch gekennzeichnet, daß der Basislack als Bindemittel ein Polymer enthält, das erhältlich ist, indem in einem organischen Lösemittel oder in einem Gemisch organischer Lösemittel bei 80 bis 160°C
(A) ethylenisch ungesättigte Monomere oder ein Gemisch ethylenisch ungesättigter Monomere in Gegenwart
(B) eines Polyurethanharzes, das in dem organischen Lösemittel oder Gemisch organischer Lösemittel gelöst ist, ein zahlenmittleres Molekulargewicht von 200 bis 30.000 aufweist und im statistischen Mittel pro Molekül 0,05 bis 1,1 polymerisierbare Doppelbindungen enthält,
radikalisch polymerisiert werden und das so erhaltene Reaktionsprodukt zumindest teilweise neutralisiert und in Wasser dispergiert wird, wobei
- das Polyurethanharz (B) aus
(a) einem Polyester- und/oder Polyetherpolyol mit einem zahlenmittleren Molekulargewicht von 400 bis 5000 oder einem Gemisch aus solchen Polyester- und/oder Polyetherpolyolen,
(b) einem Polyisocyanat oder einem Gemisch aus Polyisocyanaten,
(c) gegebenenfalls einer Verbindung, die neben einer polymerisierbaren Doppelbindung mindestens noch eine gegenüber NCO-Gruppen reaktive Gruppe enthält oder einem Gemisch aus solchen Verbindungen,
(d) gegebenenfalls einer Verbindung, die mindestens eine gegenüber Isocyanatgruppen reaktive und mindestens eine zur Anionenbildung befähigte Gruppe im Molekül aufweist oder einem Gemisch aus solchen Verbindungen
(e) gegebenenfalls einer Verbindung, die mindestens eine gegenüber NCO-Gruppen reaktive Gruppe und mindestens eine Poly(oxyalkylen)gruppe im Molekül aufweist, oder einem Gemisch aus solchen Verbindungen und gegebenenfalls
(f) einer Hydroxyl- und/oder Aminogruppen enthaltenden organischen Verbindung mit einem Molekulargewicht von 60 bis 600, oder einem Gemisch aus solchen Verbindungen
hergestellt wird
- die Komponenten (A) und (B) in einem Gewichtsverhältnis von 1 : 10 bis 10 : 1 eingesetzt werden und
- das aus (A) und (B) hergestellte Polymer eine solche Menge an zur Anionenbildung befähigten Gruppen enthält, daß das Polymer eine Säurezahl von 5 bis 200 aufweist.

2. Verfahren nach Anspruch 1, dadurch gekennzeichnet, daß das aus (A) und (B) hergestellte Polymer eine Säurezahl von 10 bis 40, eine Hydroxylzahl von 0 bis 100 und ein zahlenmittleres Molekulargewicht von 2000 bis 20.000 aufweist.

3. Verfahren nach Anspruch 1 oder 2, dadurch gekennzeichnet, daß das aus (A) und (B) hergestellte Polymer einen Polymolekularitätsindex Q = M_{W} : Mₙ von 5 bis 90 aufweist.

4. Verfahren nach einem der Ansprüche 1 bis 3, dadurch gekennzeichnet, daß das Polymer erhältlich ist, indem die Komponenten (A) und (B) in einem Gewichtsverhältnis von 1 : 2 bis 2 : 1 eingesetzt werden.

5. Verfahren nach einem der Ansprüche 1 bis 4, dadurch gekennzeichnet, daß als Komponente (B) ein Polyurethanharz eingesetzt wird, das polymerisierbare Doppelbindungen enthält, die durch Einbau von Verbindungen, die neben einer polymerisierbaren Doppelbindung mindestens noch zwei gegenüber NCO-Gruppen reaktive Gruppen enthalten, in die Moleküle des Polyurethanharzes eingeführt worden sind.

6. Verfahren nach einem der Ansprüche 1 bis 5, dadurch gekennzeichnet, daß als Komponente (B) ein Polyurethanharz eingesetzt wird, das Allylethergruppen als polymerisierbare Doppelbindungen enthält.

7. Verfahren nach einem der Ansprüche 1 bis 6, dadurch gekennzeichnet, daß als Komponente (B) ein Polyurethanharz eingesetzt wird, das Trimethylolpropanmonoallylether eingebaut enthält.

8. Verfahren nach einem der Ansprüche 1 bis 7, dadurch gekennzeichnet, daß das Polymer erhältlich ist, indem als Komponente (B) ein Polyurethanharz eingesetzt wird, das eine Säurezahl von 0 bis 2,0 aufweist.

9. Wäßriger Lack, dadurch gekennzeichnet, daß er als Bindemittel ein Polymer enthält, das erhältlich ist, indem in einem organischen Lösemittel oder in einem Gemisch organischer Lösemittel bei 80 bis 160°C
(A) ethylenisch ungesättigte Monomere oder ein Gemisch ethylenisch ungesättigter Monomere in Gegenwart
(B) eines Polyurethanharzes, das in dem organischen Lösemittel oder Gemisch organischer Lösemittel gelöst ist, ein zahlenmittleres Molekulargewicht von 200 bis 30.000 aufweist und im statistischen Mittel pro Molekül 0,05 bis 1,1 polymerisierbare Doppelbindungen enthält,
radikalisch polymerisiert werden und das so erhaltene Reaktionsprodukt zumindest teilweise neutralisiert und in Wasser despergiert wird, wobei
- das Polyurethanharz (B) aus
(a) einem Polyester- und/oder Polyetherpolyol mit einem zahlenmittleren Molekulargewicht von 400 bis 5000 oder einem Gemisch aus solchen Polyester- und/oder Polyetherpolyolen,
(b) einem Polyisocyanat oder einem Gemisch aus Polyisocyanaten,
(c) gegebenenfalls einer Verbindung, die neben einer polymerisierbaren Doppelbindung mindestens noch eine gegenüber NCO-Gruppen reaktive Gruppe enthält oder einem Gemisch aus solchen Verbindungen,
(d) gegebenenfalls einer Verbindung, die mindestens eine gegenüber Isocyanatgruppen reaktive und mindestens eine zur Anionenbildung befähigte Gruppe im Molekül aufweist oder einem Gemisch aus solchen Verbindungen
(e) gegebenenfalls einer Verbindung, die mindestens eine gegenüber NCO-Gruppen reaktive Gruppe und mindestens eine Poly(oxyalkylen)gruppe im Molekül aufweist, oder einem Gemisch aus solchen Verbindungen und gegebenenfalls
(f) einer Hydroxyl- und/oder Aminogruppen enthaltenden organischen Verbindung mit einem Molekulargewicht von 60 bis 600, oder einem Gemisch aus solchen Verbindungen
hergestellt wird
- die Komponenten (A) und (B) in einem Gewichtsverhältnis von 1 : 10 bis 10 : 1 eingesetzt werden und
- das aus (A) und (B) hergestellte Polymer eine solche Menge an zur Anionenbildung befähigten Gruppen enthält, daß das Polymer eine Säurezahl von 5 bis 200 aufweist.

10. Wäßriger Lack nach Anspruch 9, dadurch gekennzeichnet, daß das aus (A) und (B) hergestellte Polymer eine Säurezahl von 10 bis 40, eine Hydroxylzahl von 0 bis 100 und ein zahlenmittleres Molekulargewicht von 2000 bis 20.000 aufweist.

## Claims

1. Process for the production of a multicoat finish on a substrate surface, in which
(1) a pigmented agueous basecoat is applied to the substrate surface,
(2) a polymer film is formed from the composition applied in stage (1),
(3) a transparent topcoat is applied to the basecoat obtained in this way and subsequently
(4) the basecoat is baked together with the topcoat,
characterized in that the basecoat comprises as binder a polymer which can be obtained by subjecting
(A) ethylenically unsaturated monomers or a mixture of ethylenically unsaturated monomers in the presence of
(B) a polyurethane resin which is dissolved in the organic solvent or mixture of organic solvents, has a number average molecular weight of 200 to 30,000 and contains on statistical average 0.05 to 1.1 polymerizable double bonds per molecule,
to radical polymerization in an organic solvent or in a mixture of organic solvents at 80 to 160°C and neutralizing at least partially the reaction product obtained in this way and dispersing it in water,
- the polyurethane resin (B) being prepared from
(a) a polyester polyol and/or a polyether polyol having a number average molecular weight of 400 to 5,000, or a mixture of such polyester polyols and/or polyether polyols,
(b) a polyisocyanate or a mixture of polyisocyanates,
(c) if appropriate, a compound which contains in addition to a polymerizable double bond at least one group reactive toward NCO groups, or a mixture of such compounds,
(d) if appropriate, a compound which contains in the molecule at least one group which is reactive toward isocyanate groups and at least one group which is capable of forming anions, or a mixture of such compounds,
(e) if appropriate, a compound which contains in the molecule at least one group which is reactive toward NCO groups and at least one poly(oxyalkylene) group, or a mixture of such compounds and, if appropriate,
(f) an organic compound containing hydroxyl and/or amino groups having a molecular weight of 60 to 600, or a mixture of such compounds,
- components (A) and (B) are employed in a ratio by weight of 1 : 10 to 10 : 1 and
- the polymer prepared from (A) and (B) contains a quantity of groups capable of forming anions which is such that the polymer has an acid number of 5 to 200.

2. Process according to Claim 1, characterized in that the polymer prepared from (A) and (B) has an acid value of 10 to 40, a hydroxyl value of 0 to 100 and a number average molecular weight of 2,000 to 20,000.

3. Process according to Claim 1 or 2, characterized in that the polymer prepared from (A) and (B) has a polymolecularity index Q = M_{W}:Mₙ of 5 to 90.

4. Process according to any one of Claims 1 to 3, characterized in that the polymer can be obtained by using the components (A) and (B) in a weight ratio of 1:2 to 2:1.

5. Process according to any one of Claims 1 to 3, characterized in that a polyurethane resin which contains polymerizable double bonds, introduced into the molecules of the polyurethane resin by incorporation of compounds which contain, in addition to a polymerizable double bond, at least two groups reactive toward NCO groups, is used as the component (B).

6. Process according to any one of Claims 1 to 5, characterized in that a polyurethane resin which contains allyl ether groups as polymerizable double bonds is used as the component (B).

7. Process according to any one of Claims 1 to 6, characterized in that a polyurethane resin which has trimethylolpropane monoallyl ether incorporated is used as the component (B).

8. Process according to any one of Claims 1 to 7, characterized in that the polymer can be obtained by using as the component (B) a polyurethane resin which has an acid value of 0 to 2.0.

9. Aqueous paint, characterized in that it contains as binder a polymer which can be obtained by subjecting
(A) ethylenically unsaturated monomers or a mixture of ethylenically unsaturated monomers in the presence of
(B) a polyurethane resin which is dissolved in the organic solvent or mixture of organic solvents, has a number average molecular weight of 200 to 30,000 and contains on statistical average 0.05 to 1.1 polymerizable double bonds per molecule,
to radical polymerization in an organic solvent or in a mixture of organic solvents at 80 to 160°C and neutralizing at least partially the reaction product obtained in this way and dispersing it in water
- the polyurethane resin (B) being prepared from
(a) a polyester polyol and/or a polyether polyol having a number average molecular weight of 400 to 5,000, or a mixture of such polyester polyols and/or polyether polyols,
(b) a polyisocyanate or a mixture of polyisocyanates,
(c) if appropriate, a compound which contains in addition to a polymerizable double bond at least one group reactive toward NCO groups, or a mixture of such compounds,
(d) if appropriate, a compound which contains in the molecule at least one group which is reactive toward isocyanate groups and at least one group which is capable of forming anions, or a mixture of such compounds,
(e) if appropriate, a compound which contains in the molecule at least one group which is reactive toward NCO groups and at least one poly(oxyalkylene) group, or a mixture of such compounds and, if appropriate,
(f) an organic compound containing hydroxyl and/or amino groups having a molecular weight of 60 to 600, or a mixture of such compounds,
- components (A) and (B) are employed in a ratio by weight of 1 : 10 to 10 : 1 and
- the polymer prepared from (A) and (B) contains a quantity of groups capable of forming anions which is such that the polymer has an acid number of 5 to 200.

10. Aqueous paint according to Claim 9, characterized in that the polymer prepared from (A) and (B) has an acid value of 10 to 40, a hydroxyl value of 0 to 100 and a number average molecular weight of 2,000 to 20,000.

## Revendications

1. Procédé de préparation d'un laquage multicouche sur la surface d'un substrat, lors duquel
(1) on applique une laque de base aqueuse pigmentée sur la surface du substrat,
(2) on forme à partir de la composition appliquée dans l'étape (1) un film polymère,
(3) on applique sur la couche de base ainsi obtenue une laque de finition transparente et
(4) on soumet ensuite conjointement à cuisson la couche de base et la couche de finition,
caractérisé en ce que la laque de base en tant que liant contient un polymère qui s'obtient en ce que, dans un solvant organique ou dans un mélange de solvants organiques à une température de 80 à 160°C on polymérise par voie radicalaire
(A) des monomères éthyléniquement insaturés ou un mélange de monomères éthyléniquement insaturés en présence
(B) d'une résine de polyuréthane, qui est dissoute dans un solvant organique ou dans un mélange de solvants organiques, qui présente un poids moléculaire moyen de 200 à 30 000 et qui contient en moyenne statistique par molécule de 0,05 à 1,1 liaisons doubles polymérisables,
et en ce que l'on neutralise au moins en partie et que l'on disperse dans l'eau le produit de réaction ainsi obtenu,
- la résine polyester (B) étant préparée à partir
(a) d' un polyesterpolyol et/ou d'un polyétherpolyol ayant un poids moléculaire moyen de 400 à 5 000 ou d'un mélange de tels polyesterpolyols et/ou de tels polyétherpolyols,
(b) d'un polyisocyanate ou d'un mélange de polyisocyanates,
(c) le cas échéant, d'un composé, qui, outre une liaison double polymérisable, contient au moins aussi un groupe réactif vis-à-vis des groupes NCO, ou d'un mélange de tels composés,
(d) le cas échéant, d'un composé, qui présente dans la molécule au moins un groupe réactif vis-à-vis des groupes isocyanates et au moins un groupe capable de former des anions, ou d'un mélange de tels composés,
(e) le cas échéant, d'un composé, qui présente dans la molécule au moins un groupe réactif vis-à-vis des groupes NCO et au moins un groupe poly(oxyalkylène), ou d'un mélange de tels composés et, le cas échéant,
(f) d'un composé organique, contenant des groupes amino et/ou hydroxyles, ayant un poids moléculaire de 60 à 600, ou d'un mélange de tels composés,
- les composants (A) et (B) étant utilisés dans un rapport pondéral de 1 : 10 à 10 : 1 et
- le polymère préparé à partir de (A) et de (B) contenant une quantité de groupes capables de former des anions telle que le polymère présente un indice d'acidité de 5 à 200.

2. Procédé selon la revendication 1, caractérisé en ce que le polymère préparé à partir de (A) et de (B) présente un indice d'acidité de 10 à 40, un indice hydroxyle de 0 à 100 et un poids moléculaire moyen de 2 000 à 20 000.

3. Procédé selon la revendication 1 ou 2, caractérisé en ce que le polymère préparé à partir de (A) et de (B) présente un indice de polymolécularité Q = M_{w} : Mₙ de 5 à 90.

4. Procédé selon l'une quelconque des revendications 1 à 3, caractérisé en ce que la polymère s'obtient en utilisant les composants (A) et (B) dans un rapport pondéral de 1 : 2 à 2 : 1.

5. Procédé selon l'une quelconque des revendications 1 à 4, caractérisé en ce que l'on utilise en tant que composant (B) une résine de polyuréthane, qui contient des liaisons doubles polymérisables qui ont été introduites dans la molécule de la résine de polyuréthane par l'insertion de composés qui, outre une liaison double polymérisable, contiennent encore au moins deux groupes réactifs vis-à-vis des groupes NCO.

6. Procédé selon l'une quelconque des revendications 1 à 5, caractérisé en ce que l'on utilise en tant que compos ant (B) une résine de polyuréthane qui contient en tant que liaisons doubles polymérisables des groupes d'éther allylique.

7. Procédé selon l'une quelconque des revendications 1 à 6, caractérisé en ce que l'on utilise en tant que composant (B) une résine de polyuréthane qui contient, inséré dans celle-ci, l'éther monoallylique du triméthylolpropane.

8. Procédé selon l'une quelconque des revendications 1 à 7, caractérisé en ce que le polymère s'obtient en ce que l'on utilise en tant que composant (B) une résine de polyuréthane qui présente un indice d'acidité de 0 à 2,0.

9. Laque aqueuse, caractérisée en ce qu'elle contient en tant que liant un polymère qui s'obtient en ce que, dans un solvant organique ou dans un mélange de solvants organiques à une température de 80 à 160°C on polymérise par voie radicalaire
(A) des monomères éthyléniquement insaturés ou un mélange de monomères éthyléniquement insaturés en présence
(B) d'une résine de polyuréthane, qui est dissoute dans un solvant organique ou dans un mélange de solvants organiques, qui présente un poids moléculaire moyen au nombre de 200 à 30 000 et qui contient en moyenne statistique par molécule de 0,05 à 1,1 liaisons doubles polymérisables,
et en ce que l'on neutralise au moins en partie et que l'on disperse dans l'eau le produit de réaction ainsi obtenu,
- la résine polyester (B) étant préparée à partir
(a) d'un polyesterpolyol et/ou d'un polyétherpolyol ayant un poids moléculaire moyen de 400 à 5 000 ou d'un mélange de tels polyesterpolyols et/ou de tels polyétherpolyols,
(b) d'un polyisocyanate ou d'un mélange de polyisocyanates,
(c) le cas échéant, d'un composé, qui, outre une liaison double polymérisable, contient au moins aussi un groupe réactif vis-à-vis des groupes NCO, ou d'un mélange de tels composés,
(d) le cas échéant, d'un composé, qui présente dans la molécule au moins un groupe réactif vis-à-vis des groupes isocyanates et au moins un groupe capable de former des anions, ou d'un mélange de tels composés,
(e) le cas échéant, d'un composé, qui présente dans la molécule au moins un groupe réactif vis-à-vis des groupes NCO et au moins un groupe poly(oxyalkylène), ou d'un mélange de tels composés et, le cas échéant,
(f) d'un composé organique, contenant des groupes amino et/ou hydroxyles, ayant un poids moléculaire de 60 à 600, ou d'un mélange de tels composés,
- les composants (A) et (B) étant utilisés dans un rapport pondéral de 1 : 10 à 10 : 1 et
- le polymère préparé à partir de (A) et de (B) contenant une quantité de groupes capables de former des anions telle que le polymère présente un indice d'acidité de 5 à 200.

10. Laque aqueuse selon la revendication 9, caractérisée en ce que le polymère préparé à partir de (A) et de (B) présente un indice d'acidité de 10 à 40, un indice hydroxyle de 0 à 100 et un poids moléculaire moyen de 2 000 à 20 000.
